# EUROPEAN PATENT SPECIFICATION

(11) **EP 3 477 866 B1**
(45) Date of publication and mention of the grant of the patent: **01.11.2023**
(21) Application number: 17815386.2
(22) Date of filing: 20.06.2017
(51) Int. Cl.: H04B 1/04, H04W 12/02, H04L 67/12

(54) **WIRELESS COMMUNICATION DEVICE, WIRELESS COMMUNICATION SYSTEM, WIRELESS COMMUNICATION METHOD, AND STORAGE MEDIUM HAVING WIRELESS COMMUNICATION PROGRAM STORED THEREIN**
DRAHTLOSKOMMUNIKATIONSVORRICHTUNG, DRAHTLOSKOMMUNIKATIONSSYSTEM, DRAHTLOSKOMMUNIKATIONSVERFAHREN UND SPEICHERMEDIUM MIT DARAUF GESPEICHERTEM DRAHTLOSKOMMUNIKATIONSPROGRAMM
DISPOSITIF DE COMMUNICATION SANS FIL, SYSTÈME DE COMMUNICATION SANS FIL, PROCÉDÉ DE COMMUNICATION SANS FIL ET SUPPORT D'INFORMATIONS SUR LEQUEL EST STOCKÉ UN PROGRAMME DE COMMUNICATION SANS FIL

(30) Priority: 24.06.2016 JP 2016125148
(43) Date of publication of application: 01.05.2019
(73) Proprietor: NEC Corporation, Tokyo 108-8001 (JP)
(72) Inventor: MIZUNO, Yoichiro, Tokyo 108-8001 (JP)
(74) Representative: Vossius & Partner Patentanwälte Rechtsanwälte mbB
(86) International application number: PCT/JP2017/022635
(87) International publication number: WO 2017/221918

(56) References cited:
- EP-A1- 1 289 129
- WO-A1-2005/083891
- WO-A1-2012/033182
- JP-A- H0 540 503
- JP-A- H07 212 254
- JP-A- 2006 080 992
- US-A1- 2007 184 787
- US-A1- 2009 036 171
- US-A1- 2015 147 985
- US-A1- 2016 182 100

## Description

### [Technical Field]

The present invention relates to a wireless communication device, a wireless communication system, a wireless communication method, and a computer-readable storage medium that are capable of preventing the wireless communication device from being discerned from other wireless communication devices, based on a transmission signal.

### [Background Art]

An amplifier for amplifying a signal-for-transmission is incorporated in a wireless communication device. Further, the amplifier amplifies an input signal-for-transmission with a predetermined gain and inputs a transmission signal after the amplification to an antenna. The input transmission signal is transmitted through the antenna.

Rising waveforms of transmission signals when such amplifiers start amplification of signals-for-transmission vary from amplifier to amplifier. In other words, rising waveforms of transmission signals differ from one another according to interindividual differences of amplifiers. Therefore by observing a rising waveform of a transmission signal, a wireless communication device in which an amplifier that has amplified the transmission signal is incorporated can be discerned from other wireless communication devices.

PTL 1 describes a signal control circuit that controls a rise time and a fall time of a signal that repeatedly transitions between a high level and a low level.

### [Citation List]

### [Patent Literature]

[PTL 1] Japanese Unexamined Patent Application Publication No. 2006-67497

US 2007/184787 A1 relates to a transmitter for transmitting signals, comprising: a modulator for modulating a data signal according to any of two or more modulation schemes to form a modulated signal; an amplification arrangement for amplifying the modulated signal with any of two or more levels of gain; and a control system configured to interdependently select one of the modulation schemes and one of the levels of gain, and to control the modulator to adopt the selected modulation scheme and to control the amplifier to adopt the selected level of gain.

US 2009/036171 A1 relates to a way of storing backoff and crestcomp parameters while providing access to the backoff and crestcomp parameters associated with specific transmission configurations. A long-term memory stores amplifier parameters for a plurality of different transmission configurations. A selection element selects from the long-term memory a graph of the amplifier parameters corresponding to a selected subset of the transmission configurations. The selected graph relates each of a plurality of enhanced data channel gain ratios to a corresponding amplifier parameter. The selection element transfers the selected graph from the long-term memory to a fast memory proximate a digital signal processing. Further, the selection element reselects and transfers new graphs into the fast memory.

JP 2006 080992 A discloses TDMA-based transmission device that controls output and transmission power of a frequency-converted transmitted signal, respectively based on an attenuation-amount setting value and a terminal-voltage control value. An up-converter converts the frequency of a transmitted signal modulated by a modulator. An attenuator controls the output of the frequency-converted signal and an amplifier controls the transmission power of the signal, respectively based on an attenuation-amount setting value and a terminal-voltage control value specified by a control circuit from a memory based on a transmitting slot number.

US 2015/147985 A1 discloses methods and systems capable of generating weighted parameter sets, which can be randomly addressed for dictating a waveform of each pulse to be generated by using a probability distribution function loader to load a memory table with waveform parameter values, wherein the values are loaded according to a weighted probability distribution function. Each value is then randomly addressed in the memory table and/or randomly selected from the memory table by a random number generator and fed into a signal generation circuit for creation of the waveform to be transmitted.

### [Summary of Invention]

### [Technical Problem]

However, when individual wireless communication devices are discerned from one another, a problem such as a security problem may arise.

The signal control circuit described in PTL 1 is configured to control time required for transition at a timing of transition of a signal-for-transmission between a high level and a low level. Accordingly, in order to handle a signal of a radio communication frequency, control processing needs to be performed at high speed, which may lead to a problem such as a complicated configuration.

The invention is specified by the independent claims. Preferred embodiments are defined in the dependent claims.

Therefore, an object of the present invention is to provide a wireless communication device, a wireless communication system, a wireless communication method, and a computer-readable storage medium that are capable of preventing, with a simple configuration, the wireless communication device from being discerned from other wireless communication devices, based on a transmission signal.

### [Solution to Problem]

A wireless communication device, according to the present invention, comprises the features of Claim 1.

A wireless communication system, according to the present invention, comprises the features of Claim 4.

A wireless communication method, according to the present invention, comprises the features of Claim 5.

A computer-readable medium, according to the present invention, comprises the features of Claim 6.

### [Advantageous Effects of Invention]

According to the present invention, a wireless communication device can be prevented from being discerned from other wireless communication devices, based on a transmission signal.

### [Brief Description of Drawings]

Fig. 1 is a block diagram illustrating an example configuration of a wireless communication device according to a first example embodiment of the present invention;
Fig. 2 is a block diagram illustrating an example configuration of an input signal processing unit in the wireless communication device according to the first example embodiment of the present invention;
Fig. 3 is a block diagram illustrating an example configuration of a control unit in the wireless communication device according to the first example embodiment of the present invention;
Fig. 4 is a flowchart illustrating an operation of the wireless communication device according to the first example embodiment of the present invention;
Fig. 5 is an explanatory diagram illustrating an example of a rising waveform of a transmission signal of the wireless communication device according to the first example embodiment of the present invention;
Fig. 6 is a block diagram illustrating an example configuration of an input signal processing unit in a wireless communication device according to a second example embodiment of the present invention;
Fig. 7 is a flowchart illustrating an operation of the wireless communication device according to the second example embodiment of the present invention;
Fig. 8 is a block diagram illustrating an example configuration of a wireless communication device according to a third example embodiment of the present invention;
Fig. 9 is a flowchart illustrating an operation of the wireless communication device according to the third example embodiment of the present invention;
Fig. 10 is a block diagram illustrating an example of a wireless communication device according to a fourth example embodiment of the present invention;
Fig. 11 is a flowchart illustrating an operation of the wireless communication device according to the fourth example embodiment of the present invention; and
Fig. 12 is a block diagram illustrating an example configuration of a wireless communication device according to a fifth example embodiment of the present invention.

### [Example Embodiment]

### First Example Embodiment

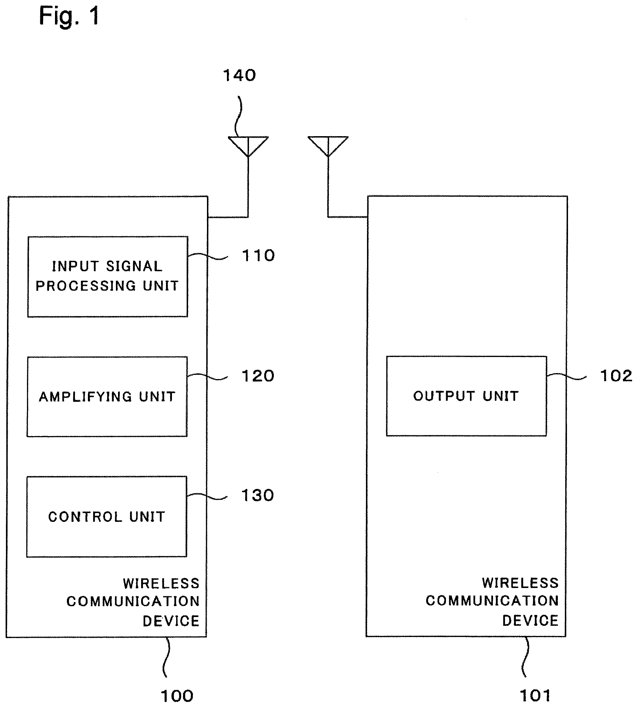

A wireless communication device according to a first example embodiment of the present invention will be described with reference to drawings. Fig. 1 is a block diagram illustrating an example configuration of a wireless communication device 100 according to the first example embodiment of the present invention. Note that a transmission unit that transmits a transmission signal through an antenna 140, which will be described later, in the wireless communication device 100 is illustrated in Fig. 1. However, the wireless communication device 100 includes the transmission unit and, for example, an output unit (reception unit) that receives a transmission signal transmitted by a transmission unit and outputs audio or the like according to the transmission signal. While a wireless communication device 101 that includes such an output unit 102 is also illustrated in Fig. 1, a configuration of the transmission unit will be descried in the present example.

As illustrated in Fig. 1, the transmission unit of the wireless communication device 100 according to the first example embodiment of the present invention includes an input signal processing unit 110, an amplifying unit 120 and a control unit 130.

The input signal processing unit 110 applies processing to an input signal that has been input and inputs a signal-for-transmission after the processing into the amplifying unit 120.

The antenna 140 is connected to the amplifying unit 120. Further, the amplifying unit 120 amplifies the signal-for-transmission input by the input signal processing unit 110 and inputs a transmission signal after the amplification into the antenna 140.

The antenna 140 converts the transmission signal input by the amplifying unit 120 to a radio wave. Then, the transmission signal converted to the radio wave is transmitted from the antenna 140.

The control unit 130 controls processing to be applied to an input signal by the input signal processing unit 110.

Note that the control unit 130 is implemented, for example, by a central processing unit (CPU) or a plurality of circuits that execute processing in accordance with program control.

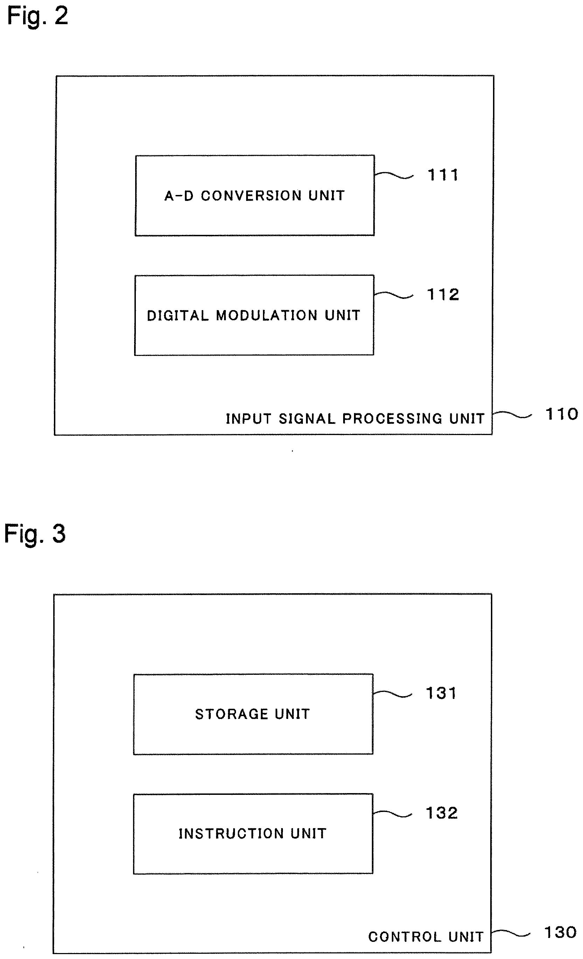

Fig. 2 is a block diagram illustrating an example configuration of the input signal processing unit 110. It is assumed in the present example embodiment that an analog audio signal is input into the input signal processing unit 110. Further, as illustrated in Fig. 2, the input signal processing unit 110 according to the present example embodiment includes an analog to digital (A-D) conversion unit 111 and a digital modulation unit 112.

The A-D conversion unit 111 converts an input analog audio signal to a digital audio signal by applying sampling processing, quantization processing, and encoding processing to the input analog audio signal. The A-D conversion unit 111 then inputs the digital audio signal after the conversion into the digital modulation unit 112.

The digital modulation unit 112 modulates a predetermined carrier wave with a digital audio signal input by the A-D conversion unit 111 using a predetermined digital modulation scheme in accordance with control by the control unit 130. The digital modulation unit 112 then inputs a signal-for-transmission, which is the signal after the modulation, into the amplifying unit 120.

Fig. 3 is a block diagram illustrating an example configuration of the control unit 130. As illustrated in Fig. 3, the control unit 130 according to the present example embodiment includes a storage unit 131 and an instruction unit 132. According to digital modulation schemes to be applied by the digital modulation unit 112 to audio signals, for example, a plurality of parameters are stored in the storage unit 131.

Specifically, when the digital modulation unit 112 is configured to apply amplitude-shift keying to audio signals, for example, parameters according to a plurality of amplitudes are individually stored in the storage unit 131. Further, when the digital modulation unit 112 is configured to apply phase-shift keying to audio signals, for example, parameters according to a plurality of phases are individually stored in the storage unit 131. When the digital modulation unit 112 is configured to apply frequency-shift keying to audio signals, for example, parameters according to a plurality of center frequencies are individually stored in the storage unit 131.

The instruction unit 132 selects any one of the plurality of parameters stored in the storage unit 131 and inputs the parameter into the digital modulation unit 112.

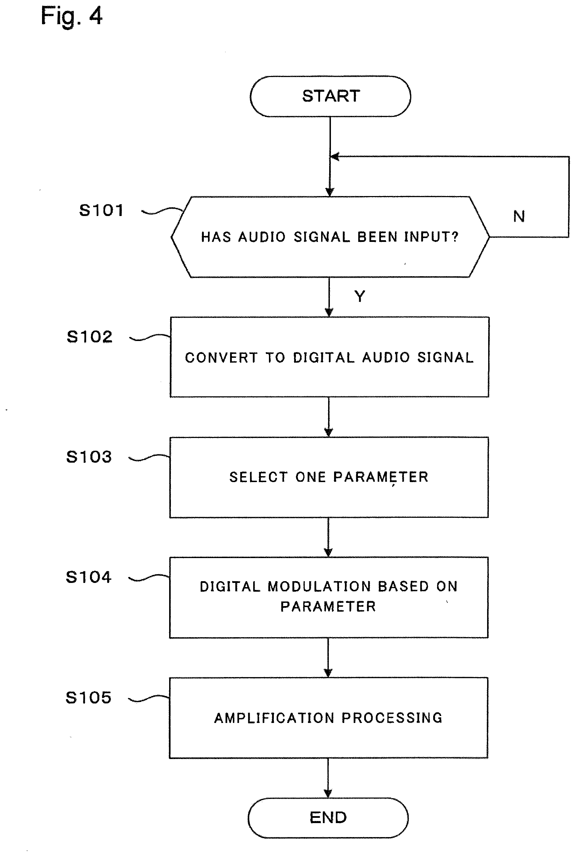

An operation of the wireless communication device 100 according to the first example embodiment of the present invention will be described next. Fig. 4 is a flowchart illustrating an operation of the wireless communication device 100 according to the first example embodiment of the present invention.

For example, when a Push To Talk (PTT) button (not depicted) of the wireless communication device 100 is pressed and a audio signal is input into the A-D conversion unit 111 as illustrated in Fig. 4 (Y in step S101), the following processing is performed. Specifically, the A-D conversion unit 111 converts the input analog audio signal to a digital audio signal (step S102). The A-D conversion unit 111 then inputs the digital audio signal after the conversion into the digital modulation unit 112.

Further, the instruction unit 132 of the control unit 130 selects any one of the plurality of parameters stored in the storage unit 131 and inputs the parameter into the digital modulation unit 112 (step S103).

Note that each of the parameters is stored in the storage unit 131 in the control unit 130 in a tabular form, for example, and the instruction unit 132 selects a parameter stored in the storage unit 131, based on a random number generated by a random number generating means (not depicted), for example. The instruction unit 132 then inputs the selected parameter into the digital modulation unit 112.

The digital modulation unit 112 applies digital modulation to a carrier wave with the input audio signal, based on the parameter input by the control unit 130 (step S104). The digital modulation unit 112 then inputs a signal-for-transmission, which is the signal after the modulation, into the amplifying unit 120.

The digital modulation unit 112 thus applies digital modulation to the carrier wave with the input audio signal, based on any of the parameters stored in the storage unit 131.

In this way, when the digital modulation unit 112 is configured to apply amplitude-shift keying to audio signals and parameters according to amplitudes are stored in the storage unit 131, a signal-for-transmission that has been digitally modulated to an amplitude according to a parameter is input into the amplifying unit 120.

Further, when the digital modulation unit 112 is configured to apply phase-shift keying to audio signals and parameters according to phases are stored in the storage unit 131, a signal-for-transmission that has been digitally modulated to a phase according to a parameter is input into the amplifying unit 120.

When the digital modulation unit 112 is configured to apply frequency-shift keying to audio signals and parameters according to frequencies are stored in the storage unit 131, a signal-for-transmission that has been digitally modulated to a center frequency according to a parameter is input into the amplifying unit 120.

The amplifying unit 120 amplifies the signal-for-transmission input by the input signal processing unit 110 and inputs a transmission signal after the amplification into the antenna 140 (step S105). The transmission signal is then converted to a radio wave and transmitted by the antenna 140.

According to the present example embodiment, the control unit 130 randomly selects a parameter to be used by the digital modulation unit 112 in processing. Then, the digital modulation unit 112 digitally modulates a carrier wave with an audio signal, based on the randomly selected parameter. A transmission signal resulting from amplification of the digitally modulated signal-for-transmission by the amplifying unit 120 is transmitted through the antenna 140.

Therefore, the transmission signal according to modulation based on the randomly selected parameter is transmitted. In this way, the wireless communication device 100 according to the first example embodiment of the present invention is capable of randomly changing a rising waveform of a transmission signal, with a simple configuration in which a parameter to be used in digital modulation processing is randomly selected. Consequently, the wireless communication device can prevent from being discerned from other wireless communication devices, based on the transmission signal.

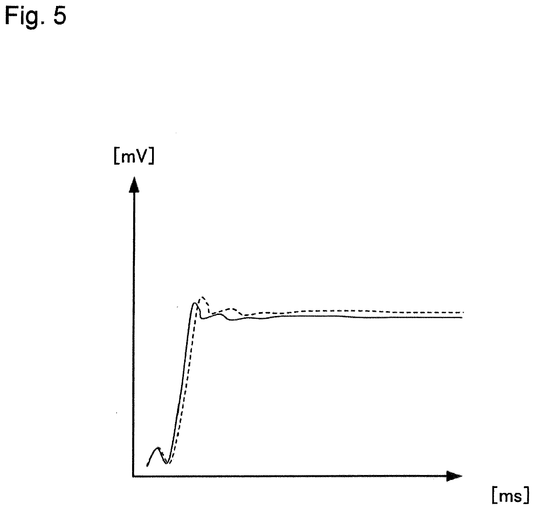

Fig. 5 is an explanatory diagram illustrating example of rising waveforms of transmission signals of the wireless communication device 100 according to the first example embodiment of the present invention. In Fig. 5, a transmission signal according to modulation based on one parameter is depicted as a solid line and a transmission signal according to modulation based on another parameter is depicted as a dashed line. As illustrated in Fig. 5, the rising waveforms are different from each other according to the parameters used for modulation. Therefore, both of the transmission signal having the rising waveform depicted as the solid line and the transmission signal having the rising waveform depicted as the dashed line can be prevented from being recognized as having been transmitted by the wireless communication device 100. In other words, a rising waveform of a transmission signal transmitted by the wireless communication device 100 can be prevented from being identified. Therefore, the wireless communication device 100 can be prevented from being discerned from other wireless communication devices, based on a transmission signal.

Note that the present example has been described on the assumption that an analog audio signal is input into the wireless communication device 100, however, a configuration may be made in such a way that digital data such as text data or numerical data are input into the digital modulation unit 112.

### Second Example Embodiment

A wireless communication device 200 according to a second example embodiment of the present invention will be described. The wireless communication device 200 according to the present example embodiment differs from the wireless communication device 100 according to the first example embodiment in that an input signal processing unit 210 includes a predistorter 213 according to nonlinear characteristics of an amplifying unit 120. The rest of the configuration of the wireless communication device 200 according to the present embodiment is the same as the configuration of the wireless communication device 100 according to the first example embodiment illustrated in Fig. 1. Therefore, corresponding elements are given the same reference symbols as those in Fig. 1 and description thereof will be omitted. It is assumed that a plurality of parameters for compensating for distortion characteristics of the amplifying unit 120 are stored in a storage unit 131 of a control unit 130. The distortion characteristics of the amplifying unit 120 are characteristics of distortion of a signal output from the amplifying unit 120 with respect to a signal input into the amplifying unit 120 and are nonlinear characteristics, for example.

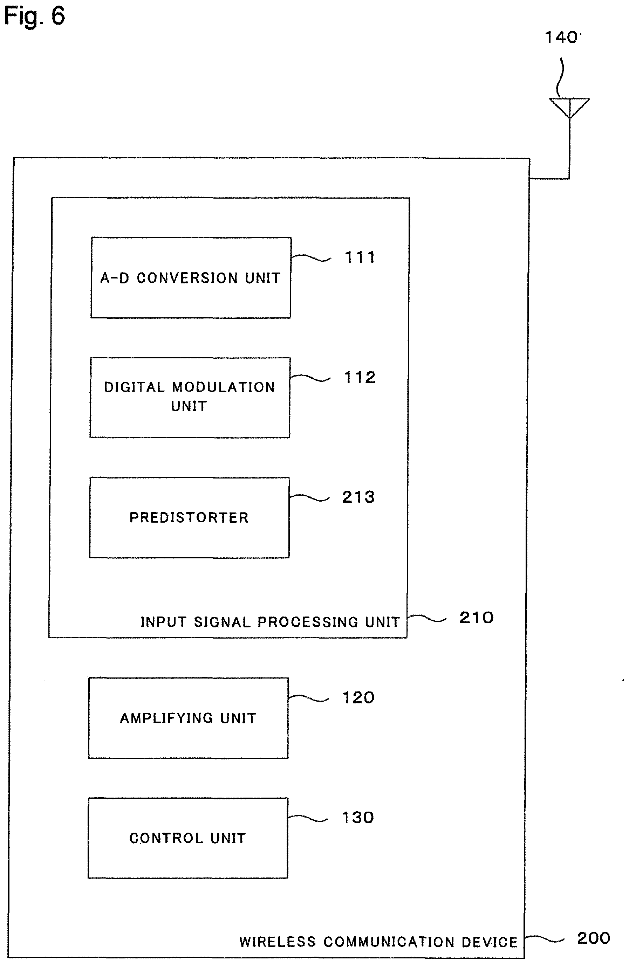

Fig. 6 is a block diagram illustrating an example configuration of an input signal processing unit 210 in the wireless communication device 200 according to the second example embodiment of the present invention. As illustrated in Fig. 6, the input signal processing unit 210 in the wireless communication device 200 according to the second example embodiment of the present invention includes an A-D conversion unit 111, a digital modulation unit 112 and the predistorter 213.

Here, the A-D conversion unit 111 inputs a digital audio signal after conversion into the predistorter 213.

The predistorter 213 applies distortion compensation processing to the digital audio signal, based on a parameter stored in the storage unit 131. The predistorter 213 then inputs the audio signal to which the distortion compensation processing has been applied into the digital modulation unit 112.

Note that the predistorter 213 may be configured to apply distortion compensation processing to an analog audio signal and input the analog audio signal into the A-D conversion unit 111. Further, the A-D conversion unit 111 may be configured to convert, to a digital audio signal, the analog audio signal to which the distortion compensation processing has been applied and input the digital audio signal into the digital modulation unit 112.

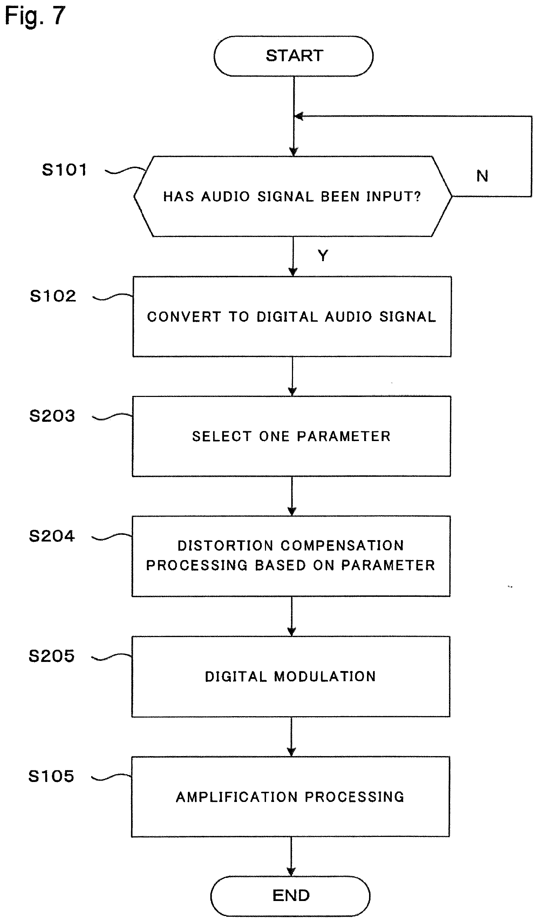

An operation of the wireless communication device 200 according to the second example embodiment of the present invention will be described next. Fig. 7 is a flowchart illustrating an operation of the wireless communication device 200 according to the second example embodiment of the present invention. In the wireless communication device 200 according to the second example embodiment of the present invention, processing from step S203 to step S205 described below is performed instead of the processing in steps S103 and 5104 in the operation of the wireless communication device 100 according to the first example embodiment of the present invention illustrated in Fig. 4. Therefore, the present example embodiment will be described with respect to the processing from step S203 to step S205 and description of other processing will be omitted.

In the processing in step S203, an instruction unit 132 of the control unit 130 selects any one of a plurality of parameters stored in the storage unit 131 and inputs the parameter into the predistorter 213 (step S203).

Note that each of the parameters is stored in the storage unit 131 in the control unit 130 in a tabular form, for example, and the instruction unit 132 selects a parameter stored in the storage unit 131, based on a random number generated by a random number generating means (not depicted), for example. The instruction unit 132 then inputs the selected parameter into the predistorter 213.

Based on the input parameter, the predistorter 213 applies distortion compensation processing to the digital audio signal input by the A-D converter unit 111 (step S204). The predistorter 213 then inputs the audio signal to which the distortion compensation processing has been applied into the digital modulation unit 112.

The digital modulation unit 112 applies predetermined digital modulation to a carrier wave with the input audio signal (step S205). The digital modulation unit 112 then inputs a signal-for-transmission, which is the signal after the modulation, into the amplifying unit 120.

According to the present example embodiment, the control unit 130 randomly selects a parameter to be used by the predistorter 213 in the distortion compensation processing. Then, the predistorter 213 applies distortion compensation processing to the audio signal, based on the randomly selected parameter. A transmission signal resulting from amplification of a signal-for-transmission by the amplifying unit 120 is transmitted through the antenna 140, the signal-for-transmission being applied the distortion processing and digitally modulated.

Therefore, the transmission signal according to the distortion compensation processing based on the randomly selected parameter is transmitted. In this way, the wireless communication device 200 according to the second example embodiment of the present invention is capable of randomly changing a rising waveform of a transmission signal, with a simple configuration in which a parameter to be used in the distortion compensation processing is randomly selected. Consequently, the wireless communication device 200 can prevent from being discerned from other wireless communication devices, based on the transmission signal.

### Third Example Embodiment

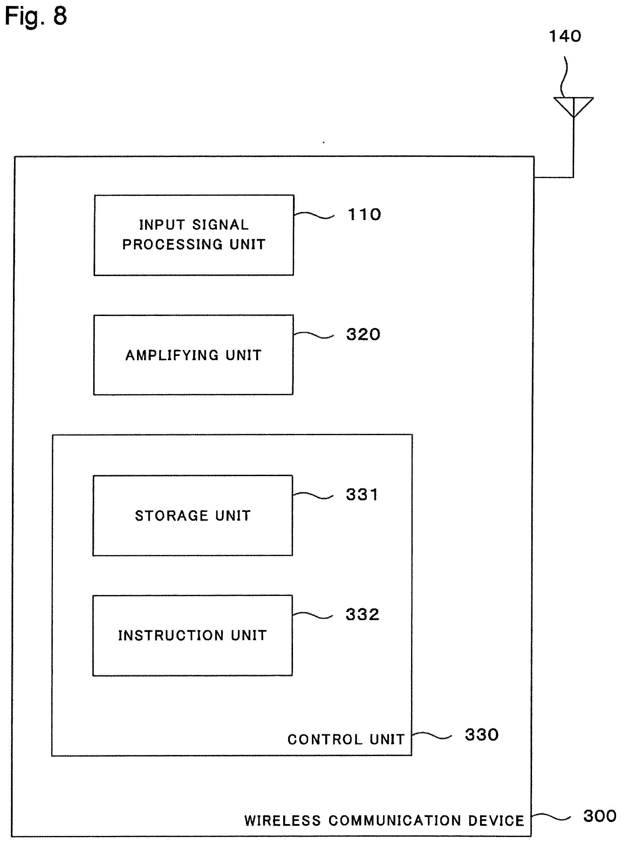

A wireless communication device 300 according to a third example embodiment of the present invention will be described next with reference to drawings. Fig. 8 is a block diagram illustrating an example configuration of the wireless communication device 300 according to the third example embodiment of the present invention. The wireless communication device 300 according to the present example embodiment differs from the wireless communication device 100 according to the first example embodiment illustrated in Fig. 1 in that the wireless communication device 300 includes a control unit 330 and an amplifying unit 320 connected to the control unit 330. The other components are the same as those of the wireless communication device 100 according to the first example embodiment illustrated in Fig. 1. Therefore, the corresponding components are given the same reference symbols as those in the Fig. 1 and description thereof will be omitted.

As illustrated in Fig. 8, the control unit 330 includes a storage unit 331 and an instruction unit 332. A plurality of parameters according to set output values for the amplifying unit 320, for example, are stored in the storage unit 331.

The instruction unit 332 selects any one of the plurality of parameters stored in the storage unit 331 and inputs the parameter into the amplifying unit 320.

The amplifying unit 320 outputs a transmission signal at an output level based on the parameter input by the instruction unit 332.

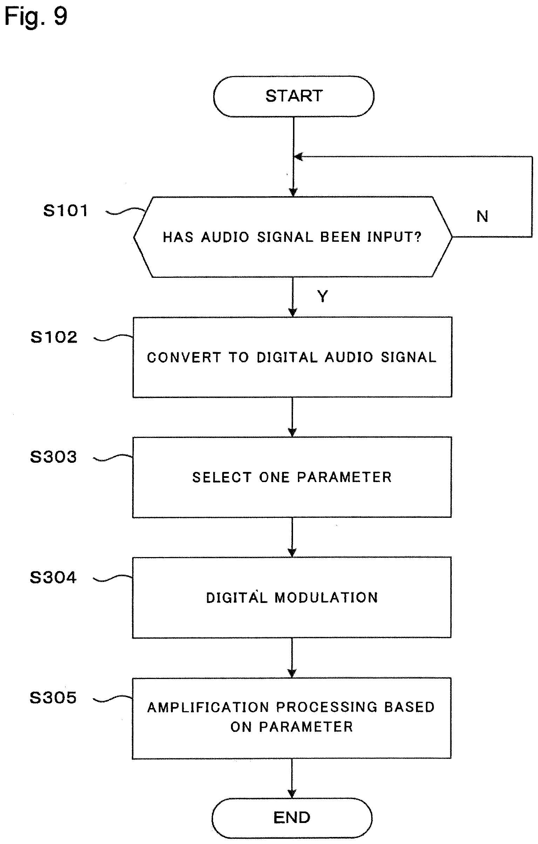

An operation of the wireless communication device 300 according to the third example embodiment of the present invention will be described next. Fig. 9 is a flowchart illustrating an operation of the wireless communication device 300 according to the third example embodiment of the present invention. In the wireless communication device 300 according to the third example embodiment of the present invention, processing from step S303 to step S305 described below is performed instead of the processing from step S103 to S105 in the wireless communication device 100 according to the first example embodiment of the present invention illustrated in Fig. 4. Therefore, the present example embodiment will be described with respect to the processing from step S303 to step S305 and description of the other processing will be omitted.

In the processing in step S303, the instruction unit 332 of the control unit 330 selects any one of the plurality of parameters stored in the storage unit 331 and inputs the parameter into the amplifying unit 320 (step S303).

Note that each of the parameters is stored in the storage unit 331 in the control unit 330 in a tabular form, for example, and the instruction unit 332 selects a parameter stored in the storage unit 331, based on a random number generated by a random number generating means (not depicted), for example. The instruction unit 332 then inputs the selected parameter into the amplifying unit 320. It is assumed here that when a rated output of the amplifying unit 320 is 3W, values in the range of +0.1 to -0.1 are stored in the storage unit 331 as parameters.

A digital modulation unit 112 applies predetermined digital modulation to a carrier wave with an input audio signal (step S304). The digital modulation unit 112 then inputs a signal-for-transmission, which is the signal after the modulation, into the amplifying unit 320.

The amplifying unit 320 amplifies the signal-for-transmission to an output level based on the parameter input by the control unit 330 in the processing in step S303 and inputs a transmission signal after the amplification into an antenna 140 (step S305). Specifically, when the rated output of the amplifying unit 320 is 3W and the parameter selected in the processing in step S303 is "+0.1", for example, the amplifying unit 320 amplifies the signal-for-transmission to an output level of 3.1 W. The amplified transmission signal is then converted to a radio wave and transmitted by the antenna 140.

According to the present example embodiment, the control unit 330 randomly selects a parameter according to an output level of a transmission signal output by the amplifying unit 320. Then, based on the randomly selected parameter, the amplifying unit 320 amplifies a signal-for-transmission. A transmission signal after the amplification is transmitted through the antenna 140.

Therefore, the transmission signal at the output level based on the randomly selected parameter is transmitted. In this way, the wireless communication device 300 according to the third example embodiment of the present invention is capable of randomly changing a rising waveform of a transmission signal with a simple configuration in which a parameter for determining an output level of a transmission signal is randomly selected. Consequently, the wireless communication device 300 can prevent from being discerned from other wireless communication devices, based on the transmission signal.

Note that while the third example embodiment is configured to change a rising waveform of a transmission signal by controlling the output level of the amplifying unit 320, based on a parameter, another method may be used instead of or in combination with the method described above.

Specifically, values according to a power supply voltage provided to the amplifying unit 320 may be stored in the storage unit 331 as parameters, for example.

More specifically, it is assumed that when the rated output power of the amplifier 320 is 10dBm, for example, values in the range of 0.9 to 1.1 are stored in the storage unit 331 as parameters. Further, it is assumed that when the rated output power of the amplifying unit 320 is 20dBm, for example, values in the range of 1.3 to 1.5 are stored in the storage unit 331 as parameters. It is assumed that when the rated output power of the amplifying unit 320 is 30dBm, for example, values in the range of 2.8 to 3.0 are stored in the storage unit 331 as parameters.

Then, the instruction unit 332 of the control unit 330 randomly selects any one of the plurality of parameters stored in the storage unit 331 using a random number or the like and provides a power supply voltage according to the selected parameter to the amplifying unit 320.

In response to the power supply voltage, input/output characteristics of the amplifying unit 320 change. Accordingly, there is transmitted a transmission signal that is output in input/output characteristics according to the power supply voltage based on the randomly selected parameter. In this way, a rising waveform of a transmission signal of the wireless communication device can be randomly changed with a simple configuration in which a parameter for determining a power supply voltage to be provided to the amplifying unit 320 is randomly selected. Consequently, the wireless communication device can prevent from being discerned from other wireless communication devices, based on the transmission signal.

### Fourth Example Embodiment

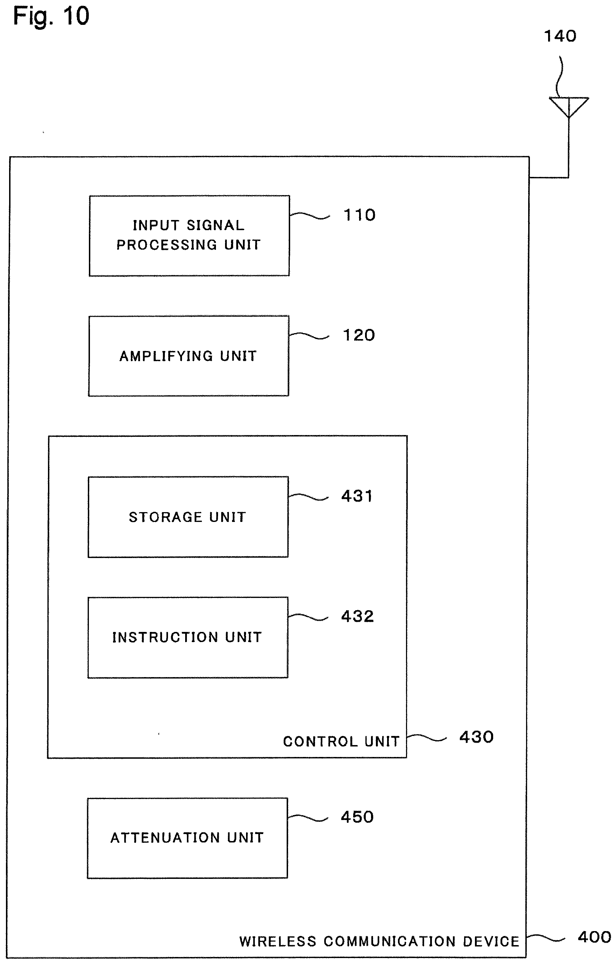

A fourth example embodiment of the present invention will be described next with reference to drawings. Fig. 10 is a block diagram illustrating an example of a wireless communication device 400 according to the fourth example embodiment of the present invention. As illustrated in Fig. 10, the wireless communication device 400 according to the fourth example embodiment of the present invention differs from the wireless communication device 100 according to the first example embodiment in that the wireless communication device 400 includes an attenuation unit 450 and a control unit 430. The rest of the configuration is the same as the configuration of the wireless communication device 100 illustrated in Fig. 1, therefore corresponding components are given the same reference symbols and description thereof will be omitted.

Note that an input signal processing unit 110 may not have the function of performing processing according to a parameter.

As illustrated in Fig. 10, the control unit 430 includes a storage unit 431 and an instruction unit 432. A plurality of parameters according to an attenuation rate of the attenuation unit 450 are stored in the storage unit 431, for example.

The instruction unit 432 selects any one of the plurality of parameters stored in the storage unit 431 and inputs the parameter into the attenuation unit 450.

The attenuation unit 450 attenuates an input transmission signal with an attenuation rate based on the parameter input by the instruction unit 432 and inputs the attenuated transmission signal into an antenna 140. Note that the attenuation unit 450 is a digital step attenuator, for example.

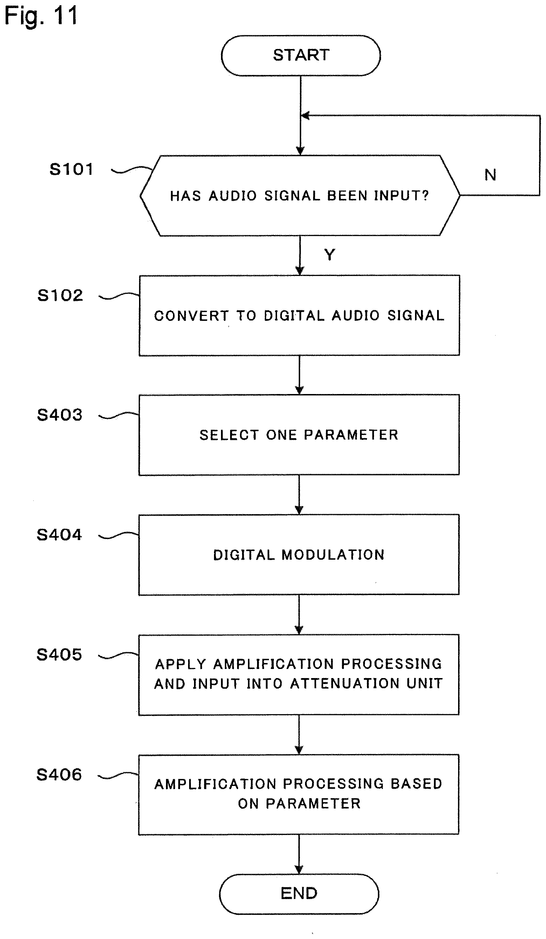

An operation of the wireless communication device 400 according to the fourth example embodiment of the present invention will be described next. Fig. 11 is a flowchart illustrating an operation of the wireless communication device 400 according to the fourth example embodiment of the present invention. In the wireless communication device 400 according to the fourth example embodiment of the present invention, processing from step S403 to step S406 described below is performed instead of the processing from step S103 to step S105 in the wireless communication device 100 according to the first example embodiment of the present invention illustrated in Fig. 4. Therefore, the present invention will be described with respect to the processing from step S403 to step S406 and description of the other processing will be omitted.

In the processing in step S403, the instruction unit 432 of the control unit 430 selects any one of the plurality of parameters stored in the storage unit 431 and inputs the parameter into the attenuation unit 450 (step S403).

Note that parameters are stored in the storage unit 431 in the control unit 430 in a tabular form, for example, and the instruction unit 432 selects a parameter stored in the storage unit 431, based on a random number generated by a random number generating means (not depicted), for example. The instruction unit 432 then inputs the selected parameter into the attenuation unit 450. It is assumed here that values in the range of 0 to 0.5 are stored in the storage unit 331 as parameters.

A digital modulation unit 112 applies predetermined digital modulation to a carrier wave with an input audio signal (step S404). The digital modulation unit 112 then inputs a signal-for-transmission, which is the signal after the modulation, into the amplifying unit 120.

The amplifying unit 120 amplifies the signal-for-transmission input by the input signal processing unit 110 and inputs the transmission signal after the amplification into the attenuation unit 450 (step S405).

The attenuation unit 450 attenuates the transmission signal input in the processing in step S405 with an attenuation rate according to the parameter input in the processing in step S403 and inputs the attenuated transmission signal to the antenna 140 (step S406). Specifically, when the parameter is "0.1", for example, the attenuation unit 450 attenuates the transmission signal by 0.1dB. The transmission signal is then converted to a radio wave and transmitted by the antenna 140.

According to the present example embodiment, the control unit 430 randomly selects a parameter according to an attenuation rate with which the attenuation unit 450 attenuates a transmission signal. Then, the attenuation unit 450 attenuates the transmission signal with an attenuation rate based on the randomly selected parameter. The transmission signal attenuated by the attenuation unit 450 is transmitted through the antenna 140.

Thus, the transmission signal attenuated based on the randomly selected parameter is transmitted. In this way, the wireless communication device 400 according to the fourth example embodiment of the present invention is capable of randomly changing a rising waveform of a transmission signal with a simple configuration in which a parameter for determining an attenuation rate with which the transmission signal is to be attenuated is randomly selected. Consequently, the wireless communication device 400 can prevent from being discerned from other wireless communication devices, based on the transmission signal.

Note that while the configuration in the present example is made in such a way that a transmission signal resulting from amplification of a signal-for-transmission by the amplifying unit 120 is attenuated by the attenuation unit 450, a configuration may be made in such a way that a signal-for-transmission is attenuated by an attenuation means that is equivalent to the attenuation unit 450.

Further, two or more of the example embodiments described above may be combined and installed in a wireless communication device. Specifically, a configuration may be made in such a way that digital modulation is performed based on one parameter as in the first example embodiment and distortion compensation processing is further performed based on another parameter as in the second example embodiment. Further, a configuration may be made in such a way that, in combination with one or both of those types of processing, an output of the amplifying unit 320 is controlled based on yet another parameter as in the third example embodiment. In addition to those types of processing, a configuration may be made in such a way that attenuation processing in the attenuation unit 450 is performed based on yet another parameter as in the fourth example embodiment in combination with either one or more of those types of processing.

By such configurations, the randomness of rising waveforms of transmission signals transmitted by a wireless communication device can be further increased. Accordingly, discernment of the wireless communication device from other wireless communication devices, based on a transmission signal can be made more difficult.

### Fifth Example Embodiment

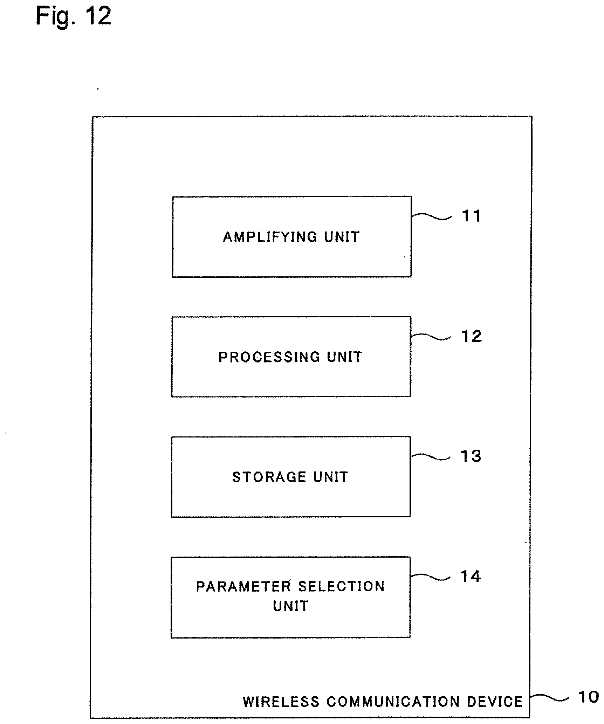

A wireless communication device 10 according to a fifth example embodiment of the present invention will be described with reference to drawings. Fig. 12 is a block diagram illustrating an example configuration of the wireless communication device 10 according to the fifth example embodiment of the present invention. As illustrated in Fig. 12, the wireless communication device 10 according to the fifth example embodiment of the present invention includes an amplifying unit 11, a processing unit 12, a storage unit 13, and a parameter selection unit 14.

The amplifying unit 11 is equivalent to the amplifying unit 120 illustrated in Figs. 1, 6 and 10 and the amplifying unit 320 illustrated in Fig. 8, for example. The processing unit 12 is equivalent to the input signal processing unit 110 illustrated in Figs. 1, 2, 8, and 10 and the input signal processing unit 210 illustrated in Fig. 6, for example. The storage unit 13 is equivalent to the storage units 131, 331 and 431 illustrated in Figs. 3, 8 and 10, for example. The parameter selection unit 14 is equivalent to the instruction units 132, 332, and 432 illustrated in Figs. 3, 8 and 10, for example.

The amplifying unit 11 generates a transmission signal by amplifying a signal.

The processing unit 12 applies processing to at least one of the signal and the transmission signal.

A plurality of parameters to be used in the processing are stored in the storage unit 13.

The parameter selection unit 14 selects one parameter from among the plurality of parameters stored in the storage unit 13.

Then, the processing unit 12 performs the processing, based on the one parameter selected by the parameter selection unit 14.

According to the present example embodiment, the parameter selection unit 14 selects a parameter to be used by the processing unit 12 in the processing. Then, based on the selected parameter, the processing unit 12 applies processing to at least one of a signal and a transmission signal. The transmission signal to which the processing has been applied or the transmission signal to which the processing has been applied and has been amplified by the amplifying unit 11 is transmitted.

Thus, the transmission signal according to the processing based on the selected parameter is transmitted. In this way, the wireless communication device 10 according to the fifth example embodiment of the present invention is capable of changing a rising waveform of a transmission signal. Consequently, the wireless communication device 10 is capable of preventing the wireless communication device from being discerned from other wireless communication devices, based on the transmission signal.

### [Reference signs List]

10, 100, 200, 300, 400 Wireless communication device
11 Amplifying unit
12 Processing unit
13, 131, 331, 431 Storage unit
14 Parameter selection unit
110, 210 Input signal processing unit
111 A-D conversion unit
112 Digital modulation unit
130, 330, 430 Control unit
132, 332, 432 Instruction unit
213 Predistorter
450 Attenuation unit

## Claims

1. A wireless communication device comprising:
amplifying means (120) configured to generate a transmission signal by amplifying a signal;
processing means (110) configured to apply processing to at least one of the signal and the transmission signal;
storage means (131) configured to store a plurality of parameters to be used in the processing;
parameter selection means (14) configured to randomly select one parameter from among a plurality of parameters stored in the storage means (131); and
attenuation means configured to apply attenuation processing to the transmission signal generated by the amplifying means (120), wherein
the processing means (110) is configured to perform the processing, based on the one parameter selected by the parameter selection means (14),
the processing means (110) includes modulation means configured to perform modulation processing that modulates a carrier wave according to an input signal,
the amplifying means (120) is configured to amplify the signal after modulation processing by the modulation means,
the storage means (131) is configured to store a plurality of parameters to be used in the modulation processing,
the modulation means is configured to perform the modulation processing, based on the one parameter selected by the parameter selection means (14)
the storage means (131) is configured to individually store parameters according to a plurality of set output values of the amplifying means (120),
the amplifying means (120) is configured to amplify the signal, based on the one parameter selected by the parameter selection means (14),
the storage means (131) is configured to store a plurality of parameters according to attenuation processing in the attenuation means,
the attenuation means is configured to apply attenuation processing to the transmission signal, based on the one parameter selected by the parameter selection means (14); and
the transmission signal to which attenuation processing is applied is transmitted.

2. The wireless communication device according to claim 1, wherein
the processing means (110) includes distortion compensation means configured to apply distortion compensation processing to the signal to be input into the amplifying means (120) according to a distortion characteristic of the amplifying means (120);
the storage means is configured to store a plurality of parameters to be used in the distortion compensation processing; and
the distortion compensation means is configured to apply the distortion compensation processing to the signal, based on the one parameter selected by the parameter selection means (14).

3. The wireless communication device according to claim 1 or 2, wherein
the storage means (131) is configured to individually store parameters according to a plurality of types of power supply voltages that can be provided for the amplifying means (120); and
the wireless communication device further comprises control means configured to control a power supply voltage to be provided for the amplifying means (120), based on the one parameter selected by the parameter selection means (14).

4. A wireless communication system comprising a plurality of the wireless communication devices according to any one of claims 1 to 3.

5. A wireless communication method comprising:
generating a transmission signal by amplifying a signal;
applying processing to at least one of the signal and the transmission signal;
randomly selecting one parameter from among a plurality of parameters stored in storage means in which a plurality of parameters to be used in the processing are stored;
applying, by attenuation means, attenuation processing to the generated transmission signal based on the one parameter selected;
performing the processing, based on the selected one parameter,
wherein the processing includes modulation processing that modulates a carrier wave according to an input signal, based on the one parameter selected,
the generating amplifies the signal after the modulation processing, based on the one parameter selected, and
the storage means is configured to: store a plurality of parameters to be used in the modulation processing, store a plurality of parameters according to attenuation processing in the attenuation means; and individually store parameters according to a plurality of set output values of the generating; and
transmitting the transmission signal to which attenuation processing is applied.

6. A computer-readable storage medium storing a program which, when executed by a wireless communication device according to any one of claims 1 to 3, cause said device to carry out the method of claim 5.

## Patentansprüche

1. Drahtloskommunikationsvorrichtung, die aufweist:
eine Verstärkungseinrichtung (120), die konfiguriert ist, um durch Verstärken eines Signals ein Übertragungssignal zu erzeugen;
eine Verarbeitungseinrichtung (110), die konfiguriert ist, um eine Verarbeitung auf das Signal und/oder das Übertragungssignal anzuwenden;
eine Speichereinrichtung (131), die konfiguriert ist, um mehrere Parameter, die in der Verarbeitung verwendet werden sollen, zu speichern;
eine Parameterauswahleinrichtung (14), die konfiguriert ist, um zufällig einen Parameter aus mehreren in der Speichereinrichtung (131) gespeicherten Parametern auszuwählen; und
eine Dämpfungseinrichtung, die konfiguriert ist, um eine Dämpfungsverarbeitung auf das von der Verstärkungseinrichtung (120) erzeugte Übertragungssignal anzuwenden, wobei
die Verarbeitungseinrichtung (110) konfiguriert ist, um die Verarbeitung basierend auf dem von der Parameterauswahleinrichtung (14) ausgewählten einen Parameter durchzuführen,
die Verarbeitungseinrichtung (110) eine Modulationseinrichtung umfasst, die konfiguriert ist, um eine Modulationsverarbeitung durchzuführen, welche eine Trägerwelle gemäß einem Eingangssignal moduliert,
die Verstärkungseinrichtung (120) konfiguriert ist, um das Signal nach der Modulationsverarbeitung durch die Modulationseinrichtung zu verstärken,
die Speichereinrichtung (131) konfiguriert ist, um mehrere Parameter, die in der Modulationsverarbeitung verwendet werden sollen, zu speichern,
die Modulationseinrichtung konfiguriert ist, um die Modulationsverarbeitung basierend auf dem von der Parameterauswahleinrichtung (14) ausgewählten einen Parameter durchzuführen,
die Speichereinrichtung (131) konfiguriert ist, um Parameter gemäß mehreren festgelegten Ausgangswerten der Verstärkungseinrichtung (120) einzeln zu speichern,
die Verstärkungseinrichtung (120) konfiguriert ist, um das Signal basierend auf dem von der Parameterauswahleinrichtung (14) ausgewählten einen Parameter zu verstärken,
die Speichereinrichtung (131) konfiguriert ist, um mehrere Parameter gemäß der Dämpfungsverarbeitung in der Dämpfungseinrichtung zu speichern,
die Dämpfungseinrichtung konfiguriert ist, um basierend auf dem von der Parameterauswahleinrichtung (14) ausgewählten einen Parameter die Dämpfungsverarbeitung auf das Übertragungssignal anzuwenden; und
das Übertragungssignal, auf das die Dämpfungsverarbeitung angewendet wird, übertragen wird.

2. Drahtloskommunikationsvorrichtung nach Anspruch 1, wobei
die Verarbeitungseinrichtung (110) eine Verzerrungskompensationseinrichtung umfasst, die konfiguriert ist, um gemäß einer Verzerrungscharakteristik der Verstärkungseinrichtung (120) eine Verzerrungskompensationsverarbeitung auf das Signal, das in die Verstärkungseinrichtung (120) eingespeist werden soll, anzuwenden;
die Speichereinrichtung konfiguriert ist, um mehrere Parameter, die in der Verzerrungskompensationsverarbeitung verwendet werden sollen, zu speichern; und
die Verzerrungskompensationseinrichtung konfiguriert ist, um die Verzerrungskompensationsverarbeitung basierend auf dem von der Parameterauswahleinrichtung (14) ausgewählten einen Parameter auf das Signal anzuwenden.

3. Drahtloskommunikationsvorrichtung nach Anspruch 1 oder 2, wobei
die Speichereinrichtung (131) konfiguriert ist, um Parameter gemäß mehreren Arten von Leistungsversorgungsspannungen, die für die Verstärkungseinrichtung (120) bereitgestellt werden können, einzeln zu speichern; und
die Drahtloskommunikationsvorrichtung ferner eine Steuereinrichtung aufweist, die konfiguriert ist, um eine Leistungsversorgungsspannung, die für die Verstärkungseinrichtung (120) bereitgestellt werden soll, basierend auf dem von der Parameterauswahleinrichtung (14) ausgewählten einen Parameter zu steuern.

4. Drahtloskommunikationssystem, das aufweist
mehrere der Drahtloskommunikationsvorrichtungen nach einem der Ansprüche 1 bis 3.

5. Drahtloskommunikationsverfahren, das aufweist:
Erzeugen eines Übertragungssignals durch Verstärken eines Signals;
Anwenden einer Verarbeitung auf das Signal und/oder das Übertragungssignal;
zufälliges Auswählen eines Parameters aus mehreren Parametern, die in der Speichereinrichtung gespeichert sind, in der mehrere Parameter, die in der Verarbeitung verwendet werden sollen, gespeichert sind;
Anwenden einer Dämpfungsverarbeitung auf das erzeugte Übertragungssignal basierend auf dem einen ausgewählten Parameter durch die Dämpfungseinrichtung;
Durchführen der Verarbeitung basierend auf dem einen ausgewählten Parameter,
wobei die Verarbeitung die Modulationsverarbeitung, welche eine Trägerwelle gemäß einem Eingangssignal basierend auf dem einen ausgewählten Parameter moduliert, umfasst,
wobei die Erzeugung das Signal nach der Modulationsverarbeitung basierend auf dem einen ausgewählten Parameter verstärkt, und
wobei die Speichereinrichtung konfiguriert ist, um mehrere Parameter, die in der Modulationsverarbeitung verwendet werden sollen, zu speichern, mehrere Parameter gemäß der Dämpfungsverarbeitung in der Dämpfungseinrichtung zu speichern; und Parameter gemäß mehreren festgelegten Ausgangswerten der Erzeugung einzeln zu speichern; und
Übertragen des Übertragungssignals, auf das die Dämpfungsverarbeitung angewendet wird.

6. Computerlesbares Speichermedium, das ein Programm speichert, das, wenn es von einer Drahtloskommunikationsvorrichtung nach einem der Ansprüche 1 bis 3 ausgeführt wird, bewirkt, dass die Vorrichtung das Verfahren nach Anspruch 5 ausführt.

## Revendications

1. Dispositif de communication sans fil comprenant :
des moyens d'amplification (120) configurés pour générer un signal de transmission par l'amplification d'un signal ;
des moyens de traitement (110) configurés pour appliquer un traitement à au moins l'un parmi le signal et le signal de transmission ;
des moyens de stockage (131) configurés pour stocker une pluralité de paramètres à utiliser dans le traitement ;
des moyens de sélection de paramètre (14) configurés pour sélectionner aléatoirement un paramètre parmi une pluralité de paramètres stockés dans les moyens de stockage (131) ; et
des moyens d'atténuation configurés pour appliquer un traitement d'atténuation au signal de transmission généré par les moyens d'amplification (120), dans lequel
les moyens de traitement (110) sont configurés pour réaliser le traitement, sur la base du paramètre sélectionné par les moyens de sélection de paramètre (14),
les moyens de traitement (110) comprennent des moyens de modulation configurés pour réaliser un traitement de modulation qui module une onde porteuse selon un signal d'entrée,
les moyens d'amplification (120) sont configurés pour amplifier le signal après un traitement de modulation par les moyens de modulation,
les moyens de stockage (131) sont configurés pour stocker une pluralité de paramètres à utiliser dans le traitement de modulation,
les moyens de modulation sont configurés pour réaliser le traitement de modulation, sur la base du paramètre sélectionné par les moyens de sélection de paramètre (14),
les moyens de stockage (131) sont configurés pour stocker individuellement des paramètres selon une pluralité de valeurs de sortie réglées des moyens d'amplification (120),
les moyens d'amplification (120) sont configurés pour amplifier le signal, sur la base du paramètre sélectionné par les moyens de sélection de paramètre (14),
les moyens de stockage (131) sont configurés pour stocker une pluralité de paramètres selon un traitement d'atténuation dans les moyens d'atténuation,
les moyens d'atténuation sont configurés pour appliquer un traitement d'atténuation au signal de transmission, sur la base du paramètre sélectionné par les moyens de sélection de paramètre (14) ; et
le signal de transmission auquel un traitement d'atténuation est appliqué est transmis.

2. Dispositif de communication sans fil selon la revendication 1, dans lequel
les moyens de traitement (110) comprennent des moyens de compensation de distorsion configurés pour appliquer un traitement de compensation de distorsion au signal à entrer dans les moyens d'amplification (120) selon une caractéristique de distorsion des moyens d'amplification (120) ;
les moyens de stockage sont configurés pour stocker une pluralité de paramètres à utiliser dans le traitement de compensation de distorsion ; et
les moyens de compensation de distorsion sont configurés pour appliquer le traitement de compensation de distorsion au signal, sur la base du paramètre sélectionné par les moyens de sélection de paramètre (14).

3. Dispositif de communication sans fil selon la revendication 1 ou 2, dans lequel
les moyens de stockage (131) sont configurés pour stocker individuellement des paramètres selon une pluralité de types de tensions d'alimentation électrique qui peuvent être fournies pour les moyens d'amplification (120) ; et
le dispositif de communication sans fil comprend en outre des moyens de commande configurés pour commander une tension d'alimentation électrique à fournir pour les moyens d'amplification (120), sur la base du paramètre sélectionné par les moyens de sélection de paramètre (14).

4. Système de communication sans fil comprenant
une pluralité des dispositifs de communication sans fil selon l'une quelconque des revendications 1 à 3.

5. Procédé de communication sans fil comprenant :
la génération d'un signal de transmission par l'amplification d'un signal ;
l'application d'un traitement à au moins l'un parmi le signal et le signal de transmission ;
la sélection aléatoire d'un paramètre parmi une pluralité de paramètres stockés dans des moyens de stockage dans lesquels une pluralité de paramètres à utiliser dans le traitement sont stockés ;
l'application, par des moyens d'atténuation, d'un traitement d'atténuation au signal de transmission généré sur la base du paramètre sélectionné ;
la réalisation du traitement, sur la base du paramètre sélectionné,
dans lequel le traitement comprend un traitement de modulation qui module une onde porteuse selon un signal d'entrée, sur la base du paramètre sélectionné,
la génération amplifie le signal après le traitement de modulation, sur la base du paramètre sélectionné, et
les moyens de stockage sont configurés pour : stocker une pluralité de paramètres à utiliser dans le traitement de modulation, stocker une pluralité de paramètres selon un traitement d'atténuation dans les moyens d'atténuation ; et stocker individuellement des paramètres selon une pluralité de valeurs de sortie réglées de la génération ; et
la transmission du signal de transmission auquel un traitement d'atténuation est appliqué.

6. Support de stockage lisible par ordinateur stockant un programme qui, lorsqu'il est exécuté par un dispositif de communication sans fil selon l'une quelconque des revendications 1 à 3, amène ledit dispositif à effectuer le procédé selon la revendication 5.
